# EUROPEAN PATENT SPECIFICATION

(11) **EP 1 994 634 B1**
(45) Date of publication and mention of the grant of the patent: **29.05.2013**
(21) Application number: 07713254.6
(22) Date of filing: 12.03.2007
(51) Int. Cl.: H02M 3/335

(54) **A POWER CONVERTER**
STROMWANDLER
CONVERTISSEUR DE PUISSANCE

(30) Priority: 10.03.2006 IE 20060186
(43) Date of publication of application: 26.11.2008
(73) Proprietor: Commergy Technologies Limited, Ballsbridge, Dublin 4 (IE)
(72) Inventor: YOUNG, George, County Dublin (IE)
(74) Representative: Holt, Michael
(86) International application number: PCT/IE2007/000035
(87) International publication number: WO 2007/105188

(56) References cited:
- US-A- 6 094 038
- US-A1- 2005 068 792
- US-B1- 6 650 551

## Description

### Introduction

This invention relates to a power converter comprising a converter input, a converter output and an output synchronous rectification stage, the output synchronous rectification stage comprising a plurality of switching devices, an output inductor and an output capacitor. US2005/0068792 discloses a power converter having the features of the preamble of claim 1.

Power converter, and more specifically ACDC power converters, are used in a wide variety of applications. These power converters are used in the power supplies of numerous types of disparate electronic equipment to transform the incoming AC line voltage to a suitable DC voltage that may be used by the electronic equipment to operate. There has been a recent trend towards providing power converters that are more efficient than was heretofore the case. By providing more efficient power converters, the power converters generate less heat than was previously the case and therefore will have less of a requirement for cooling of the power converter components. This allows for a more compact, less complex construction of power converter to be implemented. Furthermore, by increasing the efficiency of the power converter, the standby power loss of the power converters can be significantly reduced which reduces the amount of energy consumed by the electronic equipment and furthermore enhances the safety aspect of the power converter.

It is an object of the present invention to provide a power converter which is both simple and inexpensive to construct and at the same time provides improved functionality and efficiency with respect to at least some of the known power converters.

### Statements of Invention

According to the invention there is provided an apparatus as set forth in claim 1.

By having such a power converter, the performance of the power converter will be greatly improved. This is achieved partially by using the tapped output inductor in place of the normal output inductor. By providing a separate reverse recovery device connected to the tapped conductor, it is possible to provide an alternative route for the freewheeling current in the power converter. In doing so, it is possible to provide material reductions in the ripple current as well as material reductions in device stress in the power converter, as well as an improvement in the losses experienced in these types of converters by transferring the freewheeling current from the field effect transistors (FETs) to the reverse recovery device. The reverse recovery device will have better reverse recovery characteristics than the body diodes of the synchronous rectifiers and this will have the direct consequence of allowing use of the power converter configuration at higher frequencies than was previously possible. It is envisaged that the construction of power converter shown can operate at frequencies in the range of 1.5MHz whereas the previously known power converters were only able to operate in the range of a few hundred KHz. Furthermore, this is seen as a particularly simple construction of power converter to implement and is relatively inexpensive to provide. Furthermore, this construction requires very little alteration to the existing constructions of power converter which will allow for simple modification of the known designs.

In another embodiment of the invention there is provided a power converter in which the separate reverse recovery device comprises a diode. A diode is seen as a particularly simple and efficient device for use as the reverse recovery device and is inexpensive to incorporate into the power converter.

In a further embodiment of the invention there is provided a power converter in which the separate reverse recovery device comprises a Schottky diode. A Schottky diode is seen as a particularly preferred implementation of the reverse recovery device. The Schottky diode will have significantly better reverse recovery characteristics than the body diodes of synchronous rectifiers, for example, and therefore will allow improved operation of the power converter in particular at high frequencies.

In one embodiment of the invention there is provided a power converter in which the power converter is operated using integral cycle control. Operation of the power converter using integral cycle control may be greatly facilitated by using a Schottky diode and the additional winding section. The effects of the dropout periods are rendered less severe thereby leading to improved performance using integral cycle control.

In another embodiment of the invention there is provided a power converter in which the power converter is operated using full duty cycle. This is also seen as useful as the current implementation will allow for benefits to be obtained at the dead-times in terms of reverse recovery current steering. It will be understood that this has a wide application to converters operating with full-duty cycle isolation stages without the cycle drops associated with integral cycle control.

In one embodiment of the invention there is provided a power converter in which the tapped inductor in a centre tapped inductor. It is envisaged that by having a centre tapped device and in particular a very close coupling between the two sections of the output inductor, optimum operation of the power converter may be achieved. By having very closely coupled sections zero current switching of the switching devices may be achieved which may further increase the efficiency of the power converter thus reducing the power consumption of the power converter.

In another embodiment of the invention there is provided a power converter in which the converter is constructed using co-wound wire. It is envisaged that the co-wound wire may be provided by way of a multiply stranded wire. By having a centre tapped inductor and co-wound wire the two portions of the centre tapped inductor will be very closely coupled together thereby allowing for a more balanced power converter to be implemented that improves the efficiency of the converter and allows zero current switching of the switching devices of the power converter. It is envisaged that planar construction techniques may be used as an alternative to or in addition with the co-wound wire techniques and this will allow for closely coupled sections of the output inductor.

In a further embodiment of the invention there is provided a power converter in which the switching devices each comprise a self driven rectifier, each self driven rectifier further comprises a field effect transistor (FET) having a drive winding and a power winding associated therewith. This is seen as a particularly simple and efficient construction of power converter that is relatively inexpensive to implement.

In one embodiment of the invention there is provided a power converter in which there are provided a pair of switching devices. This is seen as a particularly compact and inexpensive construction of power converter to implement. Alternatively, it is envisaged that there may be four switching devices.

### Detailed Description of the Invention

The invention will now be more clearly understood from the following description of some embodiments thereof given by way of example only, with reference to the accompanying drawings, in which:-
Fig. 1 is a circuit schematic of a power converter known in the art;
Fig. 2 is a circuit schematic of an output synchronous rectification stage for use in a power converter according to the present invention; and
Figs. 3(a) and 3(b) are waveforms taken from node "X" of the output synchronous rectifier stage shown in Fig. 2 with the diode omitted and the diode fitted, respectively.

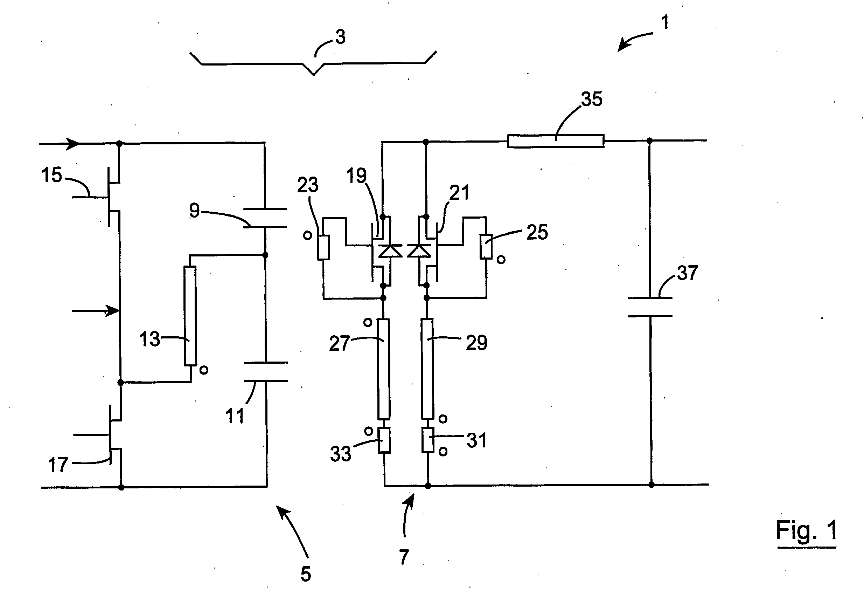

Referring to the drawings and initially to Fig. 1 thereof, there is shown a circuit schematic of a known type of ACDC converter, indicated generally by the reference numeral 1, comprising an input stage (not shown) and an output stage 3 which in turn further comprises a half bridge stage 5 and an output synchronous rectification stage 7. The input stage comprises a bulk capacitor (not shown) which feeds the half bridge stage 5 and in particular a pair of capacitors 9, 11. The half bridge stage 5 further comprises a primary winding 13 and a pair of primary FETs 15, 17. The output synchronous rectification stage 7 comprises a pair of self driven synchronous rectifiers 19, 21 each having a drive winding 23, 25 respectively associated therewith. The output synchronous rectification stage further comprises a plurality of power windings 27, 29, 31, 33, an output inductor 35 and an output capacitor 37.

In use, the half bridge stage 5 is switched in an integral cycle fashion using self driven synchronous rectifiers. The value of the output inductor 35 determines whether the half bridge stage 5 operates in continuous or discontinuous mode. By having integral cycle operation of the half bridge stage, zero voltage switching operation may be maintained along with a self driven synchronous rectification operation which facilitates reducing stand-by losses at low voltages. Further detailed discussion of the operation of the synchronous rectifier is deemed unnecessary as it would be readily understood and apparent to the person skilled in the art.

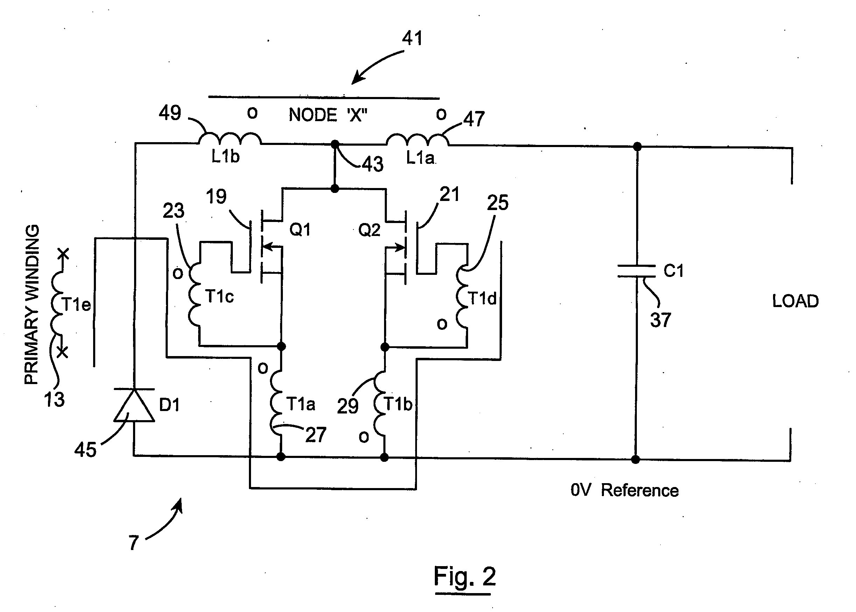

Referring to Fig. 2 of the drawings, where like parts similar to those described already are identified by the same reference numerals, there is shown a circuit schematic of an output synchronous rectification stage 7 of a power converter according to the invention. Only the output synchronous rectification stage 7 of the power converter 1 has been shown for clarity as this is the part of the power converter in which the invention resides. Various different constructions of input stage could be used as would be understood by the skilled addressee but these are not particularly relevant to the present invention. The output synchronous rectification stage 7 further comprises a centre tapped inductor 41, the tap 43 of which, also indicated as Node "X", is connected to each of the synchronous rectifiers 19, 21. The synchronous rectifiers 19, 21 further comprise field effect transistors (FET) and the tap 43 is connected to the drains of each of the FETs 19, 21. The output synchronous rectification stage 7 further comprises a separate reverse recovery device, provided by way of a Schottky diode 45, connected between ground and the tapped inductor 41. In use, the freewheeling current is allowed to flow through the Schottky diode 45. The Schottky diode 45 has superior reverse recovery characteristics than the body diodes (not shown) of the synchronous rectifiers 19, 21.

Without the Schottky diode, the synchronous rectifiers 19, 21 would have to provide a path for the freewheeling current supplied by the inductor portion 47 of the output tapped inductor 41. This freewheeling current is delivered in either a continuous or discontinuous condition depending on the energy stored in the inductor portion 47. The full output voltage would be applied across the inductor portion 47 resulting in significant current transients in the inductor and in significant values of output ripple voltage. By implementing the configuration with the Schottky diode 45, the tapped inductor in the freewheeling period is discharged by only 50% of the output voltage, which results in a smaller ripple current in the inductor. The diode current is also 50% of the normal freewheeling current and the body diodes of the synchronous rectifiers 19, 21 carry zero current in this condition. In this way, the disadvantages of poor reverse recovery characteristics of body diodes of the synchronous rectifiers 19, 21 which have a limiting factor to the usage of synchronous rectifiers at high frequencies is obviated. The freewheeling current is transferred to the Schottky diode 45 which has improved reverse recovery characteristics and therefore higher frequency operation of the power converter is achieved. Furthermore, there are material reductions in the ripple current and the device stresses imparted on the components. This will lead to an improvement in the losses of the power converter by transferring the freewheeling current in this manner.

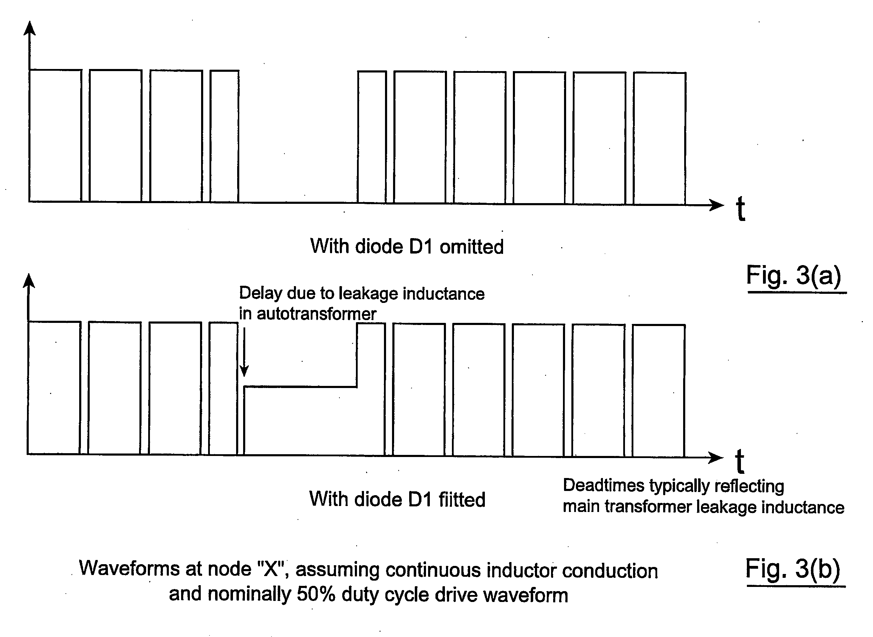

Referring to Figs. 3(a) and 3(b) of the drawings there are shown a pair of waveforms at node "X", indicated by the reference numeral 43 in Fig. 2. Fig. 3(a) shows a waveform at node "X" with diode 45 omitted. As can be seen, the freewheeling current must travel through synchronous rectifiers 19, 21. When diode 45 is incorporated into the synchronous rectification stage the waveform shown in Fig. 3(b) is achieved. There are inherent delays due to leakage inductance in the auto transformer in both of these waveforms which are largely unavoidable. The dead time is typically reflecting main transformer leakage inductance. In both of the embodiments shown the synchronous rectification stage is operated with continuous inductor conduction and a nominally 50% duty cycle drive waveforms.

It will be understood, that many modifications and indeed numerous alternative implementations giving similar effect will be evident to the one skilled in the art. It is envisaged that alternative devices other than Schottky diode with better reverse recovery characteristics than the body diodes of the synchronous rectifiers may be implemented instead of the Schottky diode. In one alternative embodiment, it is envisaged that the Schottky diode may be replaced by a synchronous rectifier with a control system to either allow reverse current flow or operation in diode emulation mode. The constructions of which and method of implementation would be known to the skilled addressee and further description is deemed unnecessary. Furthermore, the transformer ratio N (number of turns of inductor portion 47 with respect to inductor portion 49), can be relatively arbitrary within a range determined by practical issues such as leakage inductance, voltage ratings and the like. For simplicity, a value of one has been chosen for illustrative purposes, however, in order to achieve optimum efficiency of the output synchronous rectification stage it is envisaged that very close coupling between the two sections 47, 49 of the output inductor is desirable. This may be achieved in a number of ways including co-wound multiply stranded wire or planar construction techniques. These will be understood by the person skilled in the art. By using a tapped inductor in this manner it is possible to minimise ripple current and output ripple voltage in converters with integral cycle control schemes. It is also further possible to implement zero current switching of switches in the output synchronous rectification stage by using the tapped output inductor with the closely coupled sections as described.

It will be further understood that the present invention is in no way limited to the embodiments of power converter described in detail herein but more particularly applies to power converters in general that have output synchronous rectification stages. In this way, the frequency performance of the power converters may be greatly enhanced and operated in the range of 1.5MHz which was not heretofore achievable with these types of power converters. Furthermore, a pair of switching devices has been shown in the embodiments described but equally well it will be understood that this invention could be used with more than a pair of switching devices in the output synchronous rectification stage, four switching devices for example may be provided. Finally, the position of the power windings is not restricted to a position below the switching devices as shown but these windings may also be above the switching devices as shown in Figure 2.

## Claims

1. A power converter (1) comprising a converter input, a converter output and a primary half bridge stage (5) coupled to an output synchronous rectification stage (7), the output synchronous rectification stage comprising secondary power windings (27, 29), a plurality of switching devices (19, 21), an output inductor (41) and an output capacitor (37) **characterised in that** the output inductor (41) further comprises a tapped inductor, the tap (43) of which is fed from the switching devices (19, 21) and the output synchronous rectification stage (7) further comprises a separate reverse recovery device (45) connected to the tapped inductor (41) to carry freewheeling current.

2. A power converter (1) as claimed in claim 1 in which the separate reverse recovery device (45) comprises a diode.

3. A power converter (1) as claimed in claim 2 in which the diode is a Schottky diode.

4. A power converter (1) as claimed in any preceding claim in which the power converter is operated using integral cycle control.

5. A power converter (1) as claimed in any of claims 1 to 3 in which the power converter is operated using full duty cycle control.

6. A power converter (1) as claimed in any preceding claim in which the tapped inductor (41) is a centre tapped inductor.

7. A power converter (1) as claimed in any preceding claim in which the converter is constructed using co-wound wire.

8. A power converter (1) as claimed in claim 7 in which the co-wound wire is multiply stranded wire.

9. A power converter (1) as claimed in any preceding claim in which the converter is constructed using planar techniques.

10. A power converter (1) as claimed is any preceding claim in which the switching devices (19, 21) each comprise a self driven rectifier, each self driven rectifier further comprises a field effect transistor (FET) having a drive winding (23, 25) and a power winding (27, 29) associated therewith.

11. A power converter (1) as claimed in any preceding claim in which there are provided a pair of switching devices (19, 21).

12. A power converter (1) as claimed in any of claims 1 to 10 in which there are provided four switching devices.

## Patentansprüche

1. Ein Stromwandler (1) bestehend aus einem Wandlereingang, einem Wandlerausgang und einer Urhalbbrückenstufe (5) gekoppelt zu einer Ausgangssynchrongleichrichtungstufe (7), die Ausgangssynchrongleichrichtungstufe bestehend aus Nebensstromwicklungen (27, 29), einer Vielzahl von Schaltvorrichtungen (19, 21), einem Ausgangsinduktor (41) und einem Ausgangskondensator (37) gekennzeichnet indem der Ausgangsinduktor (41) dazu aus einem angezapften Induktor besteht, die Anzapfung (43) davon wird von den Schaltvorrichtungen (19, 21) rückgekoppelt und die Ausgangssynchrongleichruchtungstufe (7) dazu besteht aus einem separaten Sperrverzögerungsgerät (45), das mit dem angezapften Induktor (41) verbundet ist, um der freilaufende Strom zu tragen.

2. Ein Stromwandler (1) nach Anspruch 1, wobei das separate Sperrverzögerungsgerät (45) aus einer Diode besteht.

3. Ein Stromwandler (1) nach Anspruch 2, wobei die Diode eine Schottky-Diode ist.

4. Ein Stromwandler (1) nach allen vorhergehenden Ansprüchen, wobei der Stromwandler durch ein integrales Zyklussteuer betriebt wird.

5. Ein Stromwandler (1) nach Ansprüchen 1 - 3, wobei der Stromwandler durch ein volles Arbeitszyklussteuer betriebt wird.

6. Ein Stromwandler (1) nach allen vorhergehenden Ansprüchen, wobei der angezapfte Induktor (41) einem Mittelabgriffinduktor ist.

7. Ein Stromwandler (1) nach allen vorhergehenden Ansprüchen, wobei der Wandler von cogewickeltem Draht gemacht ist.

8. Ein Stromwandler (1) nach Anspruch 7, wobei der co-gewickelte Draht mehrfacher Draht ist.

9. Ein Stromwandler (1) nach allen vorhergehenden Ansprüchen, wobei der Wandler durch planaren Techniken konstruiert ist.

10. Ein Stromwandler (1) nach allen vorhergehenden Ansprüchen, wobei jede Schaltvorrichtung (19, 21) aus einer selbst angetriebenen Gleichrichter besteht, jeder selbst angetriebene Gleichrichter dazu besteht aus einem Feldeffekttransistor (FET) mit einer Antriebswicklung (23, 25) und einer Stromwicklung (27, 29), die damit verbundet werden.

11. Ein Stromwandler (1) nach allen vorhergehenden Ansprüchen, indem es ein Paar von Schaltvorrichtungen (19, 21) gibt.

12. Ein Stromwandler (1) nach Ansprüchen 1 - 10, indem es vier Schaltvorrichtungen gibt.

## Revendications

1. Un convertisseur de courant (1) comprenant une entrée de convertisseur, une sortie de convertisseur et une étape demi-pont primaire (5) couplés à une étape de rectification synchrone de sortie (7), l'étape de rectification synchrone de sortie comprenant des enroulements de courant secondaires (27, 29), une pluralité de dispositifs de commutation (19, 21), un inducteur de sortie (41) et un condensateur de sortie (37) **caractérisé en ce que** l'inducteur de sortie (41) comprend en outre un inducteur à prises, dont la prise (43) est alimentée des dispositifs de commutation (19, 21) et l'étape de rectification synchrone de sortie (7) comprend en outre un dispositif de recouvrement inverse séparé (45) branché à l'inducteur à prises (41) pour porter le courant à roue libre.

2. Un convertisseur de courant (1) selon la revendication 1, où le dispositif de recouvrement inverse séparé (45) comprend une diode.

3. Un convertisseur de courant (1) selon la revendication 2, où la diode est une diode Schottky.

4. Un convertisseur de courant (1) selon les revendications précédentes où le convertisseur de courant fonctionne par les moyens de contrôleur de cycle intégral.

5. Un convertisseur de courant (1) selon les revendications 1-3 où le convertisseur de courant fonctionne par les moyens de contrôleur de cycle de fonctionnement plein.

6. Un convertisseur de courant (1) selon les revendications précédentes où l'inducteur à prises (41) est un inducteur à prise médiane.

7. Un convertisseur de courant (1) selon les revendications précédentes où le convertisseur est construit en utilisant le fil co-enroulé.

8. Un convertisseur de courant (1) selon la revendication 7 où le fil co-enroulé est le fil torsadé multiplication.

9. Un convertisseur de courant (1) selon les revendications précédentes où le convertisseur est construit en utilisant les techniques de plan.

10. Un convertisseur de courant (1) selon les revendications précédentes où chaque dispositif de commutation (19, 21) comprend un redresseur auto-entrainé, chaque redresseur auto-entrainé comprend en outre un transistor à effet de champ (FET) ayant un enroulement d'entrainement (23, 25) et un enroulement de puissance (27, 29) qui lui sont associés.

11. Un convertisseur de courant (1) selon les revendications précédentes où il y a une paire de dispositifs de commutation (19, 21).

12. Un convertisseur de courant (1) selon les revendications 1 - 10 où il y a quatre dispositifs de commutation.
